# EUROPEAN PATENT APPLICATION

(11) **EP 1 298 665 A1**
(43) Date of publication of application: **02.04.2003**
(21) Application number: 02256277.1
(22) Date of filing: 11.09.2002
(51) Int. Cl.: G11B 27/32, G11B 27/034, H04N 5/775, G11B 23/36, G11B 19/12

(54) **Method, apparatus and storage medium for recording information**

(30) Priority: 27.09.2001 KR 2001060241; 30.08.2002 KR 2002051880
(71) Applicant: SAMSUNG ELECTRONICS CO., LTD., Suwon-City, Kyungki-do (KR)
(72) Inventor: Park, Sung-wook, Seocho-gu, Seoul (KR)
(74) Representative: Chugg, David John

(57) **Abstract**

Provided are a method of and an apparatus for recording editable maker information, and an information storage medium thereof. Digital broadcasting programs are received and recorded. Maker information corresponding to the digital broadcasting programs is recorded in an extended information area of a management information area in which navigation data is recorded. Maker information pointers pointing out the maker information is recorded in a program management information area of the management information area in which management information on the digital broadcasting programs is recorded so as to respectively correspond to the digital broadcasting programs. As a result, an area, in which navigation data for navigating contents having new data structures can be recorded, can be secured even in an apparatus that does not support the recording of digital broadcasting programs having new data structures. Also, when a predetermined digital broadcasting program is edited, editable navigation data corresponding to the predetermined digital broadcasting program can also be recorded.

## Description

The present invention relates to the recording of digital broadcasting programs, and more particularly, to a method of and an apparatus for recording information and an information storage medium thereof.

Digital broadcasting programs can be broadcast in the same area as conventional broadcasting programs via a plurality of broadcasting systems or scramble methods. Although the same broadcasting system is used, the data structure of a transmitted program may be different in the same area. For example, digital broadcasting companies such as Korea Broadcasting System (KBS), Mutual Broadcasting Corporation (MBC), etc., produce and broadcast programs having various data structures. Also, video and audio data of programs according to Digital Video Broadcasting (DVB) standards are based on Motion Picture Experts Group (MPEG) 2 and MPEG1/2, respectively. Video and audio data of programs according digital ground-wave propagation broadcasting standards are based on MPEG2 and Audio Coding (AC) 3, respectively.

A recording apparatus, which receives and broadcasts conventional digital broadcasting programs, records maker information specified by a maker of the recording apparatus as disc information in a navigation data area. Since maker information is specified by makers of recording apparatuses, its detailed contents vary according to the makers. In cases where maker information having different data structures is recorded only as disc information, although contents of a predetermined program are edited, i.e., changed, deleted, etc., the maker information recorded as the disc information is inconsistently edited.

For example, an assumption is made that a user A records a program A on a disc using a recording/reproducing apparatus A capable of recording ground-wave propagation broadcasting programs, records maker information of the recording/reproducing apparatus A as disc information, and lends the disc to a user B. The user B has a recording/reproducing apparatus B capable of recording video broadcasting programs. When the user B records a program B on the disc so as to overwrite the program B on the program A, at least a portion of the program A is deleted. Here, the recording/reproducing apparatus B cannot recognize the maker information recorded as the disc information along with the program A by the recording/reproducing apparatus A and cannot also recognize that the maker information recorded by the recording/reproducing apparatus A is related to the program A. Thus, although the program A is deleted, the maker information on the program A is left. Thereafter, when the user A puts the disc into the recording/reproducing apparatus A, the recording/reproducing apparatus A can recognize previously recorded maker information. For example, if at least a portion of a part of the program A, which is the maker information, deleted by the recording/reproducing B, is designated as representative information for guiding the program A, data recorded in the designated portion is reproduced as representative information for the program A. However, since the program B is already recorded in the designated portion, unexpected data (a portion of the program B) instead of the designated portion may be reproduced.

With a view to solve or reduce the above-described problems, it is an aim of embodiments of the present invention to provide a method of and an apparatus which are capable of securing an area, in which management information for navigating contents having new data structures can be recorded, even in a recording/reproducing apparatus that does not support the recording of digital broadcasting programs having the contents of new data structures and are capable of recording editable management information when editing corresponding digital broadcasting programs, and an information storage medium thereof.

It is another aim of embodiments of the present invention to provide a method and an apparatus which are capable of recording maker information on predetermined digital broadcasting programs in an editable data structure so as to cope with the edition of corresponding digital broadcasting programs between recording/reproducing apparatuses which record/reproduce digital broadcasting programs having different data structures.

According, to a first aspect of the invention there is provided a method of recording maker information. In the method, digital broadcasting programs are received and recorded and in maker information respectively corresponding to the digital broadcasting programs is recorded in an extended information area of a management information area in which navigation data is recorded. Maker information pointers pointing out the maker information is recorded in a program management information area of the management information area in which management information on the digital broadcasting programs is recorded so as to respectively correspond to the digital broadcasting programs.

In a second aspect, there is provided a method of recording maker information in which digital broadcasting programs are received and recorded; and maker information respectively corresponding to the digital broadcasting programs is recorded in a program management information area of a management information area including navigation data in which management information on the digital broadcasting programs is recorded so as to respectively correspond to the digital broadcasting programs.

It is preferable that the maker information includes maker identifier and maker specific information. The maker specific information may be navigation data of a predetermined digital broadcasting program.

In a third aspect, there is provided an apparatus for recording maker information on an information storage medium. The apparatus includes a buffer, a recording unit, and a controller. The buffer receives and buffers a bit stream constituting digital broadcasting programs. The recording unit records the buffered digital broadcasting programs on the information storage medium. The controller controls the recording unit to record the digital broadcasting programs, record maker information respectively corresponding to the digital broadcasting programs in an extended information area of a management information area in which navigation data for the digital broadcasting programs is recorded, and record maker information pointers pointing out the maker information in a program management information area of the management information area in which management information on the digital broadcasting programs is recorded so as to respectively correspond to the digital broadcasting programs.

In a fourth aspect, there is provided an apparatus for recording maker information on an information storage medium. The apparatus includes a buffer, a recording unit, and a controller. The buffer receives and buffers a bit stream constituting digital broadcasting programs. The recording unit records the buffered digital broadcasting programs on the information storage medium. The controller controls the recording unit to record the digital broadcasting programs and record maker information respectively corresponding to the digital broadcasting programs in a program information area of a management information area including navigation data in which management information on the digital broadcasting programs is recorded so as to respectively correspond to the digital broadcasting programs.

Preferably, the maker information comprises maker identifier and maker specific information.

Preferably, the maker specific information is navigation data of a predetermined digital broadcasting proram.

In a fifth aspect there is provided an information storage medium including digital broadcasting programs, maker information, and maker information pointers. The maker information respectively corresponds to the digital broadcasting programs and is recorded in an extended information area of a management information area in which navigation data necessary for reproducing, editing, and searching the digital broadcasting programs is recorded. The maker information pointers are recorded in a program management information area of the management information area in which management information on the digital broadcasting programs is recorded so as to respectively correspond to the digital broadcasting programs.

In a sixth aspect, there is provided an information storage medium including digital broadcasting programs and maker information. The maker information is recorded in a program management information area of a management information area in which navigation data necessary for reproducing, editing, and searching the digital broadcasting programs is recorded so as to respectively correspond to the digital broadcasting programs.

Preferably, the maker information comprises maker identifiers and maker specific information.

Preferably, the maker specific information is navigation data of a predetermined digital broadcasting program.

For a better understanding of the invention, and to show how embodiments of the same may be carried into effect, reference will now be made, by way of example, to the accompanying diagrammatic drawings in which:
Figure 1 is a block diagram of a recording apparatus according to a preferred embodiment of the present invention;
Figure 2 is a view of a structure of data recorded on a disc 100 shown in Figure 1;
Figures 3A and 3B are views of structures of navigation data including maker information according to an embodiment of the present invention;
Figure 4 is a view of a data structure of program management information in accordance with Figures 3A and 3B recorded on the disc 100;
Figure 5 is a view of a structure of navigation data including maker information according to another embodiment of the present invention;
Figure 6 is a view of a data structure of program management information in accordance with Figure 5 recorded on the disc 100;
Figure 7 is a view of a data structure of a program defined via navigation data;
Figures 8 through 13 are views of an example of a structure of navigation data corresponding to the navigation data shown in Figure 7; and
Figures 14 and 15 are views of another example of a structure of navigation data corresponding to the navigation data shown in Figure 7.

Hereinafter, preferred embodiments of the present invention will now be described with reference to the attached drawings.

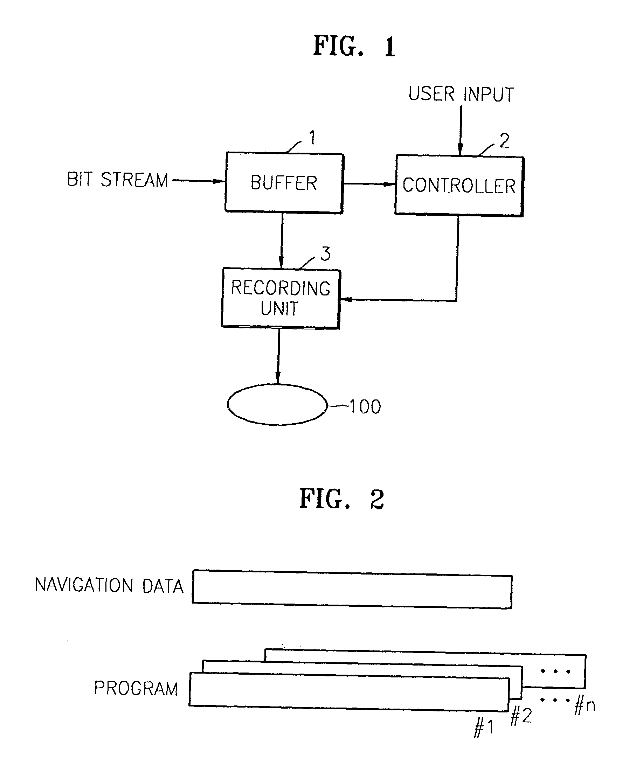

Figure 1 is a block diagram of a recording apparatus according to a preferred embodiment of the present invention. Referring to Figure 1, the recording apparatus is used to record programs received from a digital broadcasting station and includes a buffer 1, a controller 2, and a recording unit 3. The buffer 1 receives and buffers a bit stream constituting a digital broadcasting program, analyzes the bit stream, and attaches a time stamp to the bit stream. The controller 2 controls the recording unit 3 according to user input to record the digital broadcasting program buffered by the buffer 1 on a disc 100 which is an information storage medium according to this embodiment. Further, the controller 2 controls the recording unit 3 so as to record maker information on the disc 100 in a data structure according to the present invention.

Figure 2 is a view of a structure of data recorded on the disc 100 shown in Figure 1. Referring to Figure 2, navigation data and programs #1, #2, .., and #n are recorded on the disc 100.

The programs #1, #2, .., and #n denote logical units of contents recorded on the information storage medium, respectively. For example, the programs #1, #2, .., and #n may denote one take of a bit stream which is recorded until the recording of a digital broadcasting program is ended. After recording the bit stream, if a portion of the program #i is deleted, the original of the program #i is left as an object, but the time required for reproducing the program #i is reduced. If at least a portion of the program #i is changed or reproduced through an editing process, the program #i is defined so as to be successively reproduced. The programs #1, #2, .., and #n may be called "a program set". The presentation order of reproducing the program #i is identical to the order of recording the program #i. However, the presentation order may be changed when editing the program #i.

The navigation data includes information necessary for recording, reproducing, or editing programs recorded on the information storage medium. For example, the navigation data may include information on the program set, information on each of the programs, entry points (reproduction starting points), and information on a reproduction list. In particular, the navigation data includes maker information recorded in the data structure according to the present invention.

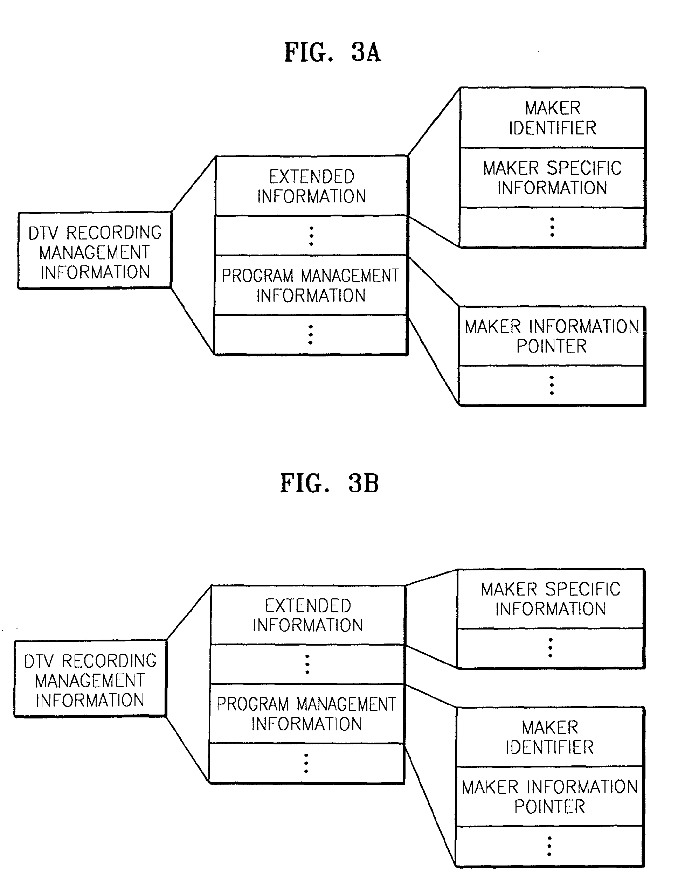

Figure 3A is a view of a structure of navigation data including maker information according to an embodiment of the present invention. Referring to Figure 3A, the navigation data is recorded as digital television (DTV) recording management information. The DTV recording management information refers to information for managing programs. In the DTV recording management information area according to this embodiment, extended information and program management information are recorded. The extended information area is an area in which additional information on unspecified contents is recorded. At least a portion of the extended information area is used to record maker information for supporting various digital broadcasting programs. Thus, the extended information includes maker identifiers and maker specific information which are the maker information according to the present invention. A recording/reproducing apparatus can check via the maker identifiers whether corresponding maker specific information is recorded by a recording/reproducing apparatus made by its maker or by another maker. Also, the recording/reproducing apparatus can check whether the corresponding maker specific information is recorded in a recognizable data structure. The program management information includes information for managing programs. For example, the program management information includes a position for recording a corresponding program, the total time required for reproducing the corresponding program, and the like. In the program management information area, maker information pointers pointing out positions of the maker specific information included in the extended information according to this embodiment are recorded.

Figure 3B is a view of a structure of navigation data including maker information according to another embodiment of the present invention. Referring to Figure 3B, as described with reference to Figure 3A, the navigation data is recorded as DTV recording management information. The DTV recording management information includes extended information and program management information. The meanings of the DTV recording management information, the extended information, and the program management information are the same as those described with reference to Figure 3A. However, positions for recording maker identifiers and maker specific information, which are maker information, are different from those shown in Figure 3. In detail, in this embodiment, the extended information area includes the maker specific information. Also, corresponding maker identifiers and maker information pointers are recorded in the program management information area. Thus, the recording/reproducing apparatus can check via the maker information pointers whether corresponding maker specific information is recorded by a recording/reproducing apparatus made by its maker or by another maker by reading the maker identifiers before searching for an area in which the maker specific information is recorded. In other words, the recording/reproducing apparatus can check whether the corresponding maker specific information is recognizable. That is, since the maker identifiers are recorded along with the maker information pointers in the program management information area, when desiring to grasp the contents of the maker specific information, if it is determined via the maker identifiers that corresponding maker specific information is not recognizable, the recording/reproducing apparatus does not need to search for an area in which corresponding data is recorded.

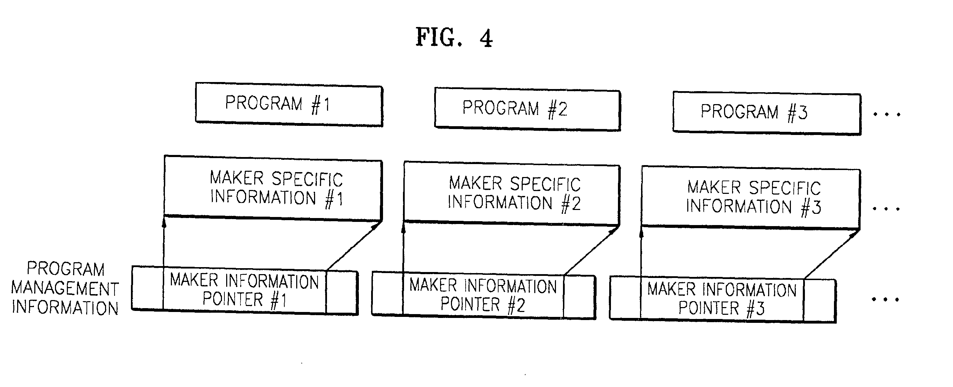

Figure 4 is a view of a data structure of program management information in accordance with Figures 3A and 3B recorded on the disc 100. Referring to Figure 4, programs #1, #2, #3, ..., and maker specific information #1, #2, #3, ... respectively corresponding to the programs #1, #2, #3, ... are recorded on the disc 100. A program management information includes maker information pointers #1m #2, #3, ... which respectively point out the maker specific information #1, #2, #3, ....

As described with reference to Figure 3A and 3B, since maker information pointers respectively corresponding to programs are recorded in a program management information area in which information necessary for editing, searching, and reproducing the programs is recorded, maker information corresponding to the programs is respectively linked to the programs. As a result, when a predetermined program is edited or deleted, maker information corresponding to the predetermined program can be also edited or deleted.

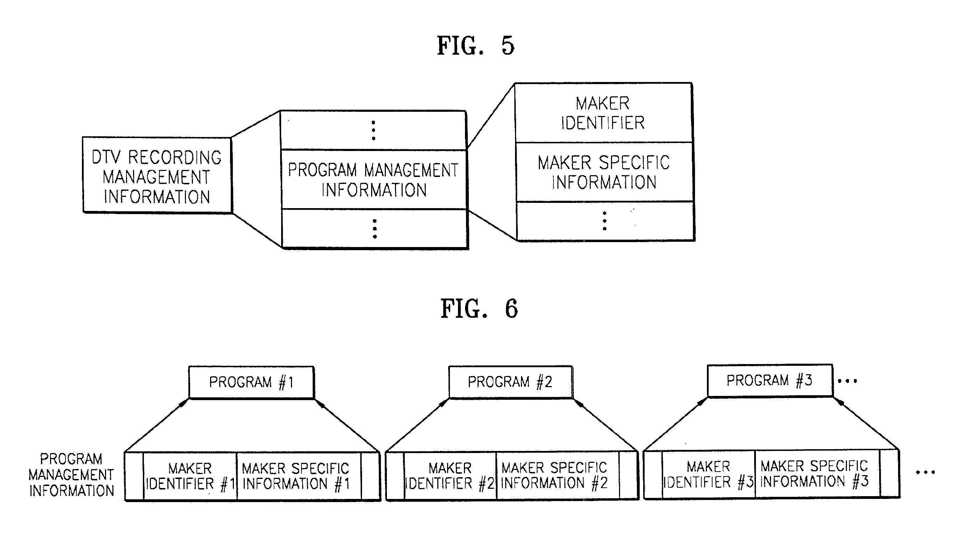

Figure 5 is a view of a structure of navigation data including maker information according to another embodiment of the present invention. Referring to Figure 5, the navigation data is recorded as DTV recording management information. The DTV recording management information refers to information for managing programs. The DTV recording management information according to this embodiment includes program management information. In the program management information area, information for managing the programs is recorded. A portion of the program management information area is used to record maker information that supports various digital broadcasting programs. In other words, the program management information includes maker identifiers and maker specific information which are maker information. The recording/reproducing apparatus can check via the maker identifiers whether corresponding maker specific information is recorded by a recording/reproducing apparatus made by its maker or by another maker. Further, the recording/reproducing apparatus can check whether the corresponding maker specific information is recorded in a recognizable data structure.

Figure 6 is a view of a structure of data of Figure 5 recorded on the disc 100. Referring to Figure 6, programs #1, #2, #3, ... are recorded on the disc 100. Maker identifiers #1, #2, #3, ... and maker specific information #1, #2, #3, ... respectively corresponding to the programs #1, #2, #3, ... are recorded as program management information on the disc 100. The program management information corresponds to the programs #1, #2, #3, ..., respectively, so as to point out corresponding programs.

As described with reference to Figure 5, since maker identifiers and maker specific information are recorded as maker information respectively corresponding to programs in a program management information area in which information necessary for editing, searching, and reproducing the programs is recorded, the maker information are linked to the programs. As a result, when a corresponding program is edited or deleted, maker information corresponding to the program can be also edited or deleted.

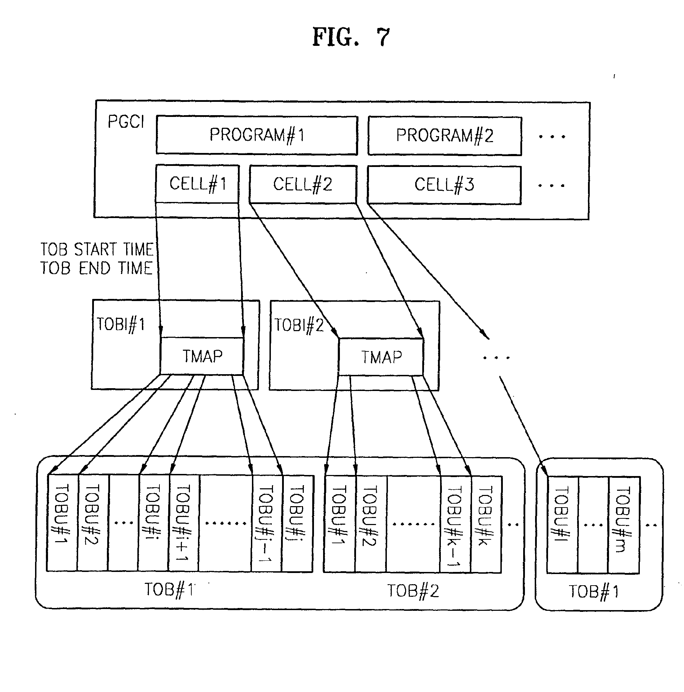

Figure 7 is a view of a data structure of a program defined via navigation data. Referring to Figure 7, ProGram Chain Information (PGCI) is a data structure for representing a ProGram Chain (PGC). The PGC refers to a chain of (portions of) programs corresponding to a play list shown to a user. The PGC can be classified into an original PGC that denotes a program set composed of a chain of programs and a user defined PGC that is defined by a user and composed of a chain of portions of programs.

A program is composed of one or more cells. The cell is a data structure representing a portion of a program and is classified into an original cell that exists in the original PGC and a user-defined cell that exists in the user defined PGC. A program included in a program set is composed of one or more original cells.

A Transport Object (TOB) denotes a bit stream in which digital broadcasting programs are recorded in real-time. A basic unit constituting the TOB is a Transport OBject Unit (TOBU) which is composed of MPEG transmission packets transmitted from a digital broadcasting station. The TOBU is a recording unit according to this embodiment, and a program is recorded, reproduced, or edited every TOBU. Transport OBject Information (TOBI) is a data structure that informs of information on the TOB. As shown in Figure 7, a time MAP (TMAP) is defined in the TOBI. The TMAP is a data table used to map a presentation time allotted to the TOB to an address of a corresponding TOBU. Thus, the cell points out a start time and an end time of a corresponding TOB of the TMAP, and the TMAP maps an address of a TOBU to be reproduced for a presentation time defined by the start time and end time.

The data structure of the TOB in this embodiment is based on [Information Technology - Generic coding of moving pictures and associated audio : Systems (ISOIEC 13818 - 1)]. In other words, one TOB includes sub-picture data, real-time data information, and MPEG transmission packets. The MPEG transmission packets include video data, audio data, and value-added user data. The TOBU constituting the TOB includes a plurality of packs having fixed sizes. In case where the sizes of packs are identical to sizes of logic blocks used in DVD family discs, the packs can be recorded in the logic blocks defined in the DVD family discs. In other words, the packs are compatible with the DVD family discs.

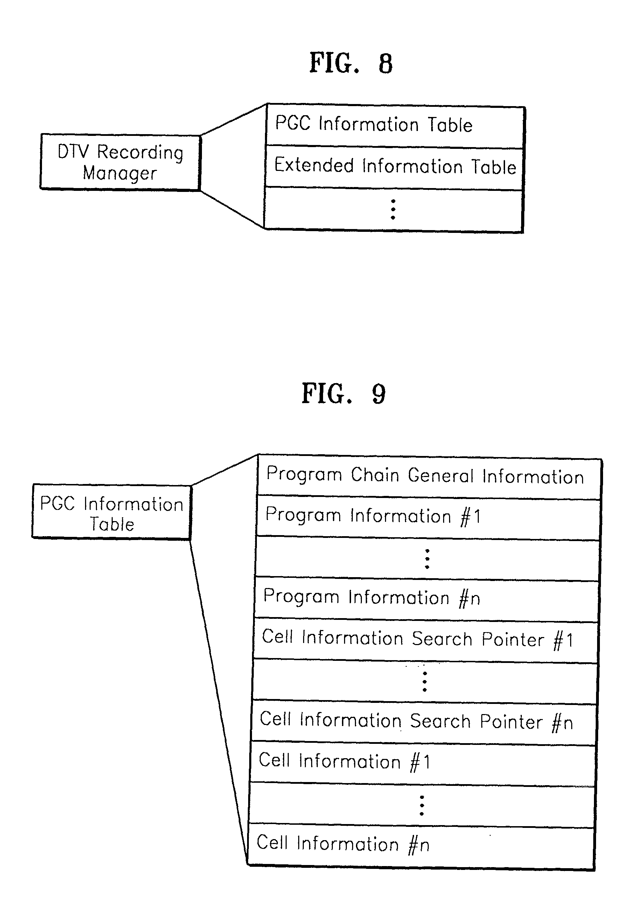

Figures 8 through 13 are views of an example of a structure of navigation data corresponding to the navigation data shown in Figure 7. Referring to Figure 8, the navigation data is recorded as a DTV recording manager which is DTV recording management information. The DTV recording manager includes a PGC information table and an extended information table.

Referring to Figure 9, in the PGC information table, program chain general information including general information on a program chain and program information #1, ..., and #n including program management information on n programs are recorded. Cell information search pointers #1, .., and #n and cell information #1, .., and #n are also recorded in the PGC information table. In the cell information #i, general information on a corresponding cell and cell entry point information are recorded. The cell entry point information points out a start time (a starting point) and an end time (an ending point) of a corresponding cell.

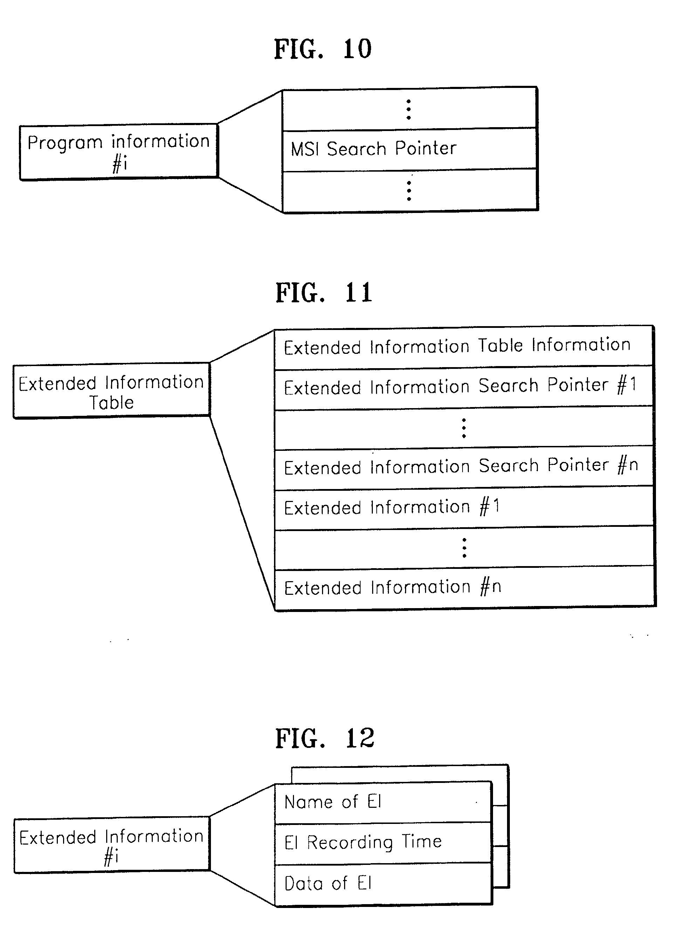

Referring to Figure 10, program information #i includes maker specific information (MSI) search pointers, which are maker information pointers.

Referring to Figure 11, the extended information table includes extended information table information, extended information search pointers #1, .., and #n, and extended information #1, .., and #n. An extended information area is an area in which additional information on unspecified contents is recorded. At least a portion of the extended information area is used to record maker information that supports various digital broadcasting programs.

Referring to Figure 12, extended information #i includes name of extended information Name of EI, recording time for extended information, and data of extended information Data of EI.

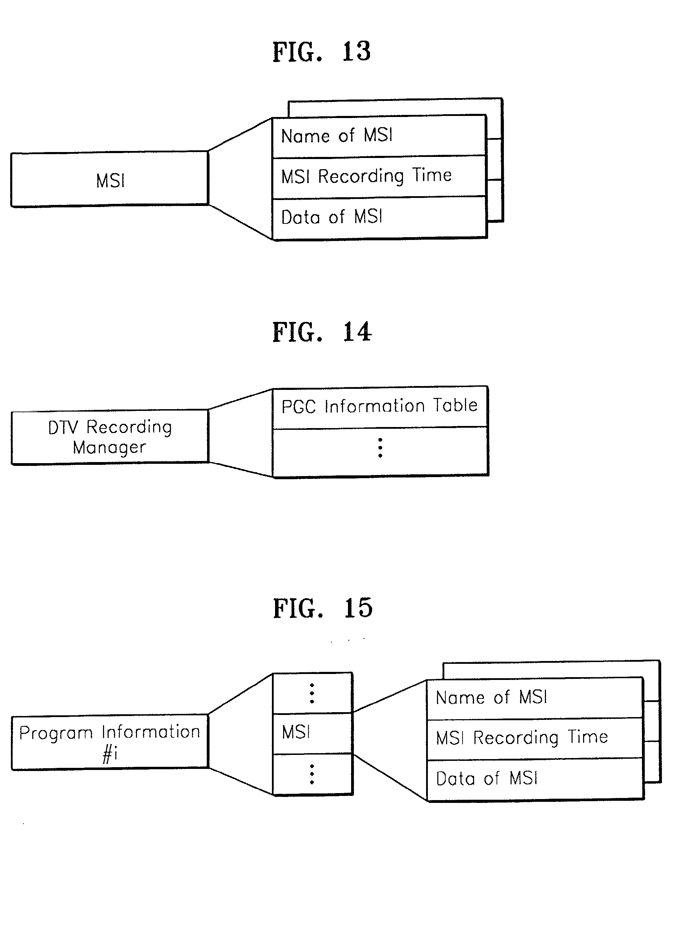

Referring to Fig. 13, a data structure of MSI, which is an example of extended information and is the maker information according to the present invention, is shown. The MSI includes name of MSI Name of MSI which are maker identifiers, recording time for MSI MSI Recording Time, and data of MSI Data of MSI. The Data of MSI has an information structure which is specified by a maker. For example, when undefined contents are navigated, navigation data necessary for reproducing or editing the undefined contents can be recorded. Copyright information, bank account information for electronic commerce, Internet addresses for updating contents, and the like may also be recorded. Further, various kinds of information specified by other makers may be recorded.

As described above, according to the data structure shown in Figures 8 through 13, since MSI information corresponding to programs is recorded in an extended information table, the MSI information is linked to the programs. As a result, when a predetermined program is edited or deleted, maker information corresponding to the predetermined program can be also edited or deleted.

Figures 14 and 15 are views of another example of a structure of navigation data corresponding to the navigation data shown in Figure 7. Referring to Figure 14, the navigation data is recorded as a DTV recording manager which is DTV recording management information. The DTV recording manager includes PGC information tables. The PGC information table has the same data structure as that of the PGC information table described with reference to Figure 9, and thus its repeated descriptions will be omitted.

Referring to Figure 15, program information #i has MSI, which is the maker information according to the present invention, along with information necessary for reproducing, searching, or editing program #i. The MSI includes name of MSI Name of MSI which is maker identifiers, recording time for MSI MSI Recording Time, and data of MSI Data of MSI. The Data of MSI has an information structure which is specified by a maker. For example, when undefined contents are navigated, navigation data necessary for reproducing or editing the undefined contents can be recorded. Copyright information, bank account information for electronic commerce, Internet addresses for updating contents, and the like may also be recorded. Further, various kinds of information specified by other makers may be recorded.

As described above, according to the data structure shown in Figure 14 and 15, since MSI is recorded in program information of a PGC information table, the MSI is linked to programs. As a result, when a predetermined program is edited or deleted, MSI information corresponding to the predetermined information can also be edited or deleted.

Meanwhile, the data structure shown in Figures 8 through 15 is matched with a navigation data structure which is supported by a recording/reproducing apparatus for recording/reproducing conventional digital broadcasting programs, except maker information. Thus, the data structure shown in Figures 8 through 15 is highly compatible with other recording/reproducing apparatuses.

As described above, according to the teachings of the present invention, an area, in which navigation data for navigating contents having new data structures can be recorded, can secured even in an apparatus that does not support the recording of digital broadcasting programs having new data structures. Also, when a predetermined digital broadcasting program is edited, editable navigation data corresponding to the predetermined digital broadcasting program can also be recorded. Further, between apparatuses for recording/reproducing digital broadcasting programs having different data structures, maker information on a predetermined digital broadcasting program can be recorded in an editable structure so as to cope with the edition of the predetermined digital broadcasting program.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of recording maker information, the method comprising:
(a) receiving and recording digital broadcasting programs;
(b) recording maker information respectively corresponding to the digital broadcasting programs in an extended information area of a management information area in which navigation data is recorded; and
(c) recording maker information pointers pointing out the maker information in a program management information area of the management information area in which management information on the digital broadcasting programs is recorded so as to respectively correspond to the digital broadcasting programs.

2. A method of recording maker information, the method comprising:
(a) receiving and recording digital broadcasting programs; and
(b) recording maker information respectively corresponding to the digital broadcasting programs in a program management information area of a management information area including navigation data in which management information on the digital broadcasting programs is recorded so as to respectively correspond to the digital broadcasting programs.

3. An apparatus for recording maker information on an information storage medium, the apparatus comprising:
a buffer (1) which receives and buffers a bit stream constituting digital broadcasting programs;
a recording unit (3) which records the buffered digital broadcasting programs on the information storage medium (100); and
a controller (2) which controls the recording unit to record the digital broadcasting programs, record maker information respectively corresponding to the digital broadcasting programs in an extended information area of a management information area in which navigation data for the digital broadcasting programs is recorded, and record maker information pointers pointing out the maker information in a program management information area of the management information area in which management information on the digital broadcasting programs is recorded so as to respectively correspond to the digital broadcasting programs.

4. An apparatus for recording maker information on an information storage medium, the apparatus comprising:
a buffer (1) which receives and buffers a bit stream constituting digital broadcasting programs;
a recording unit (3) which records the buffered digital broadcasting programs on the information storage medium; and
a controller (2) which controls the recording unit to record the digital broadcasting programs and record maker information respectively corresponding to the digital broadcasting programs in a program information area of a management information area including navigation data in which management information on the digital broadcasting programs is recorded so as to respectively correspond to the digital broadcasting programs.

5. An information storage medium (100) comprising:
digital broadcasting programs;
maker information which respectively corresponds to the digital broadcasting programs and is recorded in an extended information area of a management information area in which navigation data necessary for reproducing, editing, and searching the digital broadcasting programs is recorded; and
maker information pointers which are recorded in a program management information area of the management information area in which management information on the digital broadcasting programs is recorded so as to respectively correspond to the digital broadcasting programs.

6. An information storage medium (100) comprising:
digital broadcasting programs; and
maker information which is recorded in a program management information area of a management information area in which navigation data necessary for reproducing, editing, and searching the digital broadcasting programs is recorded so as to respectively correspond to the digital broadcasting programs.

7. The method of claim 1 or 2, the apparatus of claim 3 or 4, or the medium of claim 5 or 6, wherein the maker information comprises maker identifier and maker specific information.

8. The method, apparatus or medium of claim 7, wherein the maker specific information is navigation data of a predetermined digital broadcasting program.
